# EUROPEAN PATENT APPLICATION

(11) **EP 4 400 090 A1**
(43) Date of publication of application: **17.07.2024**
(21) Application number: 23151837.4
(22) Date of filing: 16.01.2023
(51) Int. Cl.: A61H 1/00, H02J 3/14, A61H 33/00, A61H 33/06

(54) **METHOD AND SYSTEM FOR INTERACTIVE SAUNA POWER CONTROL**

(71) Applicant: GMW Energy-Consult UG (haftungsbeschränkt), 63654 Büdingen (DE)
(72) Inventor: GERSTENBERGER, Martin Herbert, 63654 Büdingen (DE); MÜLLER, Markus, 63695 Glauburg (DE); WITTE, Sven, 63584 Gründau-Lieblos (DE)
(74) Representative: Simmons & Simmons LLP (Munich)

(57) **Abstract**

The invention discloses a method, and a device for allocating power across heating devices (HDs) located within an area of a sauna facility. The method comprises, preferably in this order, the following steps: determining if the at least two HDs located within the area of the sauna facility are turned on (S202); and identifying an operator priority allocated to each of the at least two turned on HDs (S203); where, when it is determined that the at least two HDs located within the area of the sauna facility are turned on, calculate a respective base value power needed to be provided to each respective HD to achieve and maintain a base value of temperature and/or humidity in surrounding of the each respective HD (S204), where a value of each of the respective base value power is determined based on the operator priority allocated to the respective HD, and wherein a sum of the each of the respective base value power needed to be provided to the at least two turned on HDs should not exceed a predetermined maximum power value.

## Description

### FIELD OF THE INVENTION

The invention relates to allocating power across one or more heating devices, also referred to in short as HDs, inside one or more sauna(s), located within a sauna facility.

### BACKGROUND OF THE INVENTION

The following section illustrates useful background information without admission of any techniques described herein representative of the state of the art.

Saunas are part and parcel of today's leisure, hospitality, and sports facility. The topic of controlling and regulating the temperature of sauna heaters/stoves/steam generators, here forth referred to as heating devices (HDs), is of course almost as old as (electric) sauna heaters themselves. However, a major portion of the prior art in this regard concern security issues rather than power saving opportunities. Most of the time the topics that were dealt with in the prior art concerned the following issues:
- Fire protection, e.g. "Is there an object on the HD?" or "Is a temperature limit of the HD exceeded"?
- Monitoring of sauna users inside the sauna, e.g. how long has a person been exposed to temperature X and humidity Y ?
- Detection of a critical condition, e.g. detection of a stove with malfunction, or detection of a user inside sauna possibly unconscious.

In recent years, advanced network technologies, mobile devices and related applications, Internet-of-Thing (IoT), and Artificial Intelligence (Al) have also made it interesting to record vital data in this context to optimize the "sauna experience" or the therapy effect of the saunas. Thus, saunas are also increasingly being claimed together with smart home systems.

However, only in the last 10 years the topic of energy efficiency seem to have come more into focus, especially using sensors and modern electronic aids. The (at least supportive) use of renewable energy sources/buffer storage/batteries has also been mentioned more and more often in recent times. Basically, such a corresponding energy efficient sauna control system consistently deals with regulating the sauna HD to a specific desired temperature (and possibly also to a suitable humidity). The necessary heat is usually generated by an HD (such as electric heater) which follows the supply of electrical power depending on various parameters.

The German utility model DE 202020101719 U1 discloses according to machine translation of its abstract, a thermal facility (such as saunas, or steam baths, etc.) with a thermal cabin that can be heated and ventilated for at least one person. The thermal cabin being disclosed to be equipped with adjustable heating means and adjustable ventilation means and with a temperature sensor characterized in that a detection means for the continuous detection of the presence of people in the thermal cabin, which interact with a heating control device for the heating means in such a way that if there is no presence a basic heating output is set, and if there is a comparatively higher operative heating output is set. Thus, briefly DE 202020101719 U1 discloses about the setting of a base temperature (in an "idle mode") and a usage-dependent control to a higher usage temperature (in a "use mode"). Something similar can also be inferred from a corresponding PCT application WO 2021001067 A1 of the same applicant.

In the relatively old EP 0196562 B1, the abstract discloses a method for regulating the three-phase current output of a temperature-controlled electrical sauna heating device, in dependency upon a nominal/actual temperature difference of a sauna room, by means of three regulatable relays, whereof each one switches a phase (U, V, W) and all of which, during a first method stage, are triggered at the first time of heating-up, in order to achieve the full heat output, and after reaching the nominal temperature for the first time, during a second method stage, however, only one or two of the relays are triggered, for maintaining the nominal temperature value, characterised in that during the second method stage, for maintaining the nominal temperature value, in each case one or two relays are triggered in cyclic sequence. Thus, briefly EP 0196562 B1 basically discloses about switching on or off of individual phases depending on performance requirement.

EP 3463247 B1 discloses in its abstract a method, in which a fan equipped stove of a sauna is controlled automatically between an idle mode and a sauna bathing mode of the heating of the stove based on relative air humidity of the sauna, sound measured from the sauna, a measured load on benches of the sauna, a motion sensing signal measured from the sauna and/or the temperature of the stove. A controller, a stove and a sauna using the method are also described. Thus, briefly a similar type of control from idle mode to use mode is described also in EP 3463247 B1, which also mentions the use of a fan for faster distribution of heat.

WO 2007117234 A1 discloses in its abstract a control panel used in combination with a power unit to control the operation of the sauna. The control panel is equipped with a microprocessor that has a software and proper circuitry to allow a user to use buttons to input information into the control panel regarding the time, temperature, and day on which heating within the sauna is to occur. Additionally, the power unit is disclosed to have a microprocessor with a pulse width modulation output that causes individual heating elements to continuously produce varying intensities of heat in order to maintain a consistent desired temperature, and/or intermittently radiate heat creating a wave of heat to be emitted by each individual heating element.

### SUMMARY OF THE INVENTION

Currently the known literature for achieving energy efficient sauna power control basically describes an energy efficient control system consistently dealing with regulating power to a HD to maintain a specific desired temperature, and possibly also to a suitable humidity.

Moreover, in a normal sauna facility operating in today's commercial areas, the sauna(s), i.e., corresponding HD(s) located within the sauna(s), are turned on at the beginning of the daily operation and turned off at the end of the daily operation, during which the sauna(s) are permanently heated by the corresponding HDs to a set operating temperature and/or humidity.

Thus, the so far known state of the art lacks describing how to control power allocation across several HDs, i.e., heaters/stoves/steam generators, within different saunas located with a sauna facility.

It is therefore an object of the invention to describe an efficient power allocation method and device for controlling power allocated power across several HDs located inside one or more sauna(s) within the sauna facility.

To better address this concern, a first aspect of the present invention provides a power allocation method carried out by a power control unit (PCU) for allocating power across heating devices (HDs) located within an area of a sauna facility. The method comprises, preferably in this order, the steps of determining if the at least two HDs located within the area of the sauna facility are turned on, and identifying an operator priority allocated to each of the at least two turned on HDs, where, when it is determined that the at least two HDs located within the area of the sauna facility are turned on, calculate a respective base value power needed to be provided to each respective HD to achieve and maintain a base value of temperature and/or humidity in surrounding of the each respective HD, where a value of each of the respective base value power is determined based on the operator priority allocated to the respective HD, and where a sum of the each of the respective base value power needed to be provided to the at least two turned on HDs should not exceed a predetermined maximum power value. The above outlined method thus allows, depending on the operator priority allocated to the HDs that are turned on, the HDs to get higher or lower values of their rated power to allow efficient initial heating up of the HDs to achieve their respective base value of temperature and/or humidity for a sauna area where the HD is located. Furthermore, the operator priority allows for prioritizing the individual HDs based on their operation necessity.

In an example, where, when it is determined that the sum of the each of the respective base value power needed to be provided to the at least two turned on HDs will exceed the predetermined maximum power value, the method further comprises the steps of: identifying one of the at least two turned on HDs with a lowest operator priority allocated, and reducing the base value power needed to be provided to the identified one of the at least two turned on HDs, where the base value power needed to be provided is greater or equal to a minimum power needed to operate the identified one of the at least two turned on HDs. The above outlined method allows for efficiently distributing overall system power across the HDs that are turned on initially in the sauna facility, for e.g., at the beginning of a day's operation. This allows for an efficient load (power) balanced operation of the overall sauna facility and avoid load peaks when the sauna facility starts its initial operation for the day.

In an example the method may further comprise the steps of determining a user/customer request to operate at least one of the at least two turned on HDs at a set point value of temperature and/or humidity in the surrounding of the respective HD for a preset time, based on the respective set point value, determining a respective operating power needed to be provided to the respective HD to achieve and maintain the respective set point value for the preset time in the surrounding of the respective HD, where a sum of operating power needed to be provided to the at least one of the at least two turned on HDs and base value power needed to be provided to a rest of the at least two turned on HDs should not exceed the predetermined maximum power value. This allows for large energy savings for the sauna facility as the turned on HDs, that receives the user/customer request for operation, powers up efficiently to achieve their respective set point value of temperature and/or humidity for the preset time of operation. Thereby, the sauna facility do not have to heat all the turned on HDs to achieve their respective operating temperatures and/or humidity (i.e., their respective set point value) all the time throughout the day but only for a short period of time when the user/customer request for the turned on HD arrives.

In an example, where, when it is determined that the sum of operating power needed to be provided to the at least one of the at least two turned on HDs and base value power needed to be provided to the rest of the at least two turned on HDs will exceed the predetermined maximum power value, the method further comprises the steps of: identifying one of the rest of the least two turned on HDs with the lowest operator priority allocated, and reducing the base value power needed to be provided to the identified one of the rest of the least two turned on HDs, where the base value power needed to be provided is greater or equal to a minimum power needed to operate the identified HD, and where, when it is determined that the respective base value power across each of the rest of the at least two turned on HDs is a minimum power needed to operate each of the rest of the at least two turned on HDs, the method further comprises the steps of: identifying one of the at least one of the at least two turned on HDs with the lowest operator priority allocated, and reducing the operating power to be provided to the identified one of the at least one of the at least two turned on HDs, where the operating power needed to be provided is greater or equal to a minimum power needed to operate the identified HD. This allows efficiently distributing load (power) across the turned on HDs that receives the user/customer request for operation, during the day, while making sure that the overall limit on the sauna facility maximum power budget is maintained.

In an example, where, after it is determined that the at least two HDs located within an area of a sauna facility are turned on, the base value power needed to be provided to one or more of the at least two turned on HDs is set to be sufficient to reach the set point value of temperature and/or humidity, and where, after reaching the set point value of temperature and/or humidity, the base value power returns to an extent sufficient to achieve and maintain the base value of temperature and/or humidity. This preheating step to the set point value of temperature and/or humidity once, is quite useful if the sauna (i.e., corresponding HD) is located outside in an open space of the sauna facility or if the that sauna (i.e., corresponding HD) is the most frequently visited one by a user/customer.

In an example, the method may further comprise the step of turning off the at least two turned on HDs based on a first operator input or based on a set timer. This allows the sauna facility to enjoy more energy savings while flexibly turning off the turned on HDs, as needed, based on either operator input or a set timer.

In an example, the method may further comprise the steps of collecting energy consumption data associated with each of the HDs located within the area of a sauna facility, collecting operation data associated with each of the HDs, where the operation data includes turning on/off time, operation time with/without the user/customer request, output power, and/or number of user/customer requests, generating economic data using the energy consumption data and operation data for each of the HDs, and displaying the energy consumption data, and/or the operation data, and/or the economic data on a display connected to the PCU. This allows the individual sauna (i.e., corresponding HD) of the sauna facility to be compared with each other in terms of their economic/energy efficiency.

In an example, the method may further comprise the steps of accessing a webpage for electricity transaction price information per unit time, performing the turning on, or the turning off, or setting the base value of temperature and/or humidity greater than a threshold for the at least two turned on HDs based on comparison of the electricity transaction price information per unit time against a predetermined pricing threshold. This allows an efficient cost managed operation of the sauna facility and can result in savings for both the sauna operator and the user/customer.

In an example, the method may further comprise that the power for powering the at least two turned on HDs is primarily received from a photovoltaic (PV) system during the day. For e.g., when a PV system is used as power source for powering the turned on HDs a slight increase in operating temperatures, across the operating areas of the turned on HDs, can be maintained when the PV power is available to avoid drawing power when there is cloud. The afore-mentioned feature provides a promising option for sauna facility to reduce energy charges when normal electricity retail prices are reasonably high and continuously increasing.

In an example, where, when the at least two HDs are turned on, a constant heat storage device and/or user controlled heat storage device provided for at least one of the at least two turned on HD is operated for storing heat locally, and when power is not available to operate the at least one of the at least two turned on HDs in a sufficient or economic manner, the constant heat storage device and/or the user controlled heat storage device are controlled to release the stored heat after turning off the respective HD. This allows power saving and thereby reduces the cost of running the sauna facility. Additionally, the sauna facility or the building in which it is situated can host a central heat buffer storage for the entire building (including the sauna areas). The central heat buffer storage can be supplied by combined heat and power (CHP) unit, among others, as the CHP emits heat when generating electricity. The heat from the central heat buffer storage can be used by radiators in the sauna facility, e.g. placed under the sauna benches in saunas. If there is a surplus power from the PV system, e.g. during light-intense periods, the electricity can be supplied to the CHP to generate heat and supply the buffer storage with heat to the stored. In low-light periods when the PV power supplies are too little or no electricity can be provided, the heat from the central heat buffer storage can then be used to supply the radiators in the saunas, provided that the radiators in the sauna can be directly provided with heat.

In an example, the method may further comprise the step of receiving a second operator input identifying the base value, the set point value and/or preset time; preferably where the base value of the temperature is lower than the set point value of the temperature, and/or the set point value of the temperature is about 90°C for regular sauna, about 50 to 60°C for biosauna, and about 40°C for steam sauna. This allows for efficiently adjusting various parameters based on operator input and thereby providing a regulated operation of the sauna facility.

In an example, the method may further comprise the steps of determining if the preset time for the at least one of the at least two turned on HDs has elapsed, and when the preset time has elapsed, providing a reduced operating power to the at least one of the at least two turned on HDs to operate at the base value of the temperature and/or the humidity. This allows for efficient temperature reduction in standby mode, where there is no user/customer request.

In an example, the method may further comprise that the reduced operating power is 1/3 of a nominal power of each one of the HDs and is provided by a phase in a three phase network. This allows for even wear as the phase in the three phase network are changed regularly.

In an example, the method may further comprise receiving a temperature and/or humidity value associated with at least one of the at least two turned on HDs, determining if the received temperature and/or humidity value is greater or equal to the set point value for the at least one of at least two turned on HDs, and displaying a first colour by a light source associated with the at least one of the at least two turned on HDs when it is determined that the set point value for the at least one of the at least two turned on HDs is reached, and displaying a second colour by the light source associated with the at least one of the at least two turned on HDs when it is determined that the set point value for the at least one of the at least two turned on HDs is not reached, where the second colour is different from the first colour. This allows an efficient optical feedback to indicate to the user/customer that the set point value of temperature and/or humidity is reached or not.

In an example, where, if it is detected by means of a door and/or window sensor that a surrounding door and/or window of one of the at least two turned on HDs is open for a predetermined period of time, turning off the one of the at least two turned on HDs. This allows to further reduce energy consumption of the sauna facility when a surrounding door/window of the HD is open for a predetermined period of time. Also, when using a ventilation system, in a surrounding area of an HD, actuators in the ventilation system that supply or extract air from the surrounding area of the HD can be closed if no user/customer request is detected to use the corresponding HD. They are only opened for the duration of the user/customer request (i.e., the preset time) in order to avoid heat loss.

According to a second aspect of the present invention, a PCU apparatus is provided, comprising means for carrying out the method as previously described.

According to a third aspect of the present invention, a computer program is provided, comprising instructions which, when the program is executed by a PCU, cause the PCU to carry out the method as previously described.

Finally, according to a fourth aspect of the present invention, a computer-readable medium is provided, comprising instructions which, when executed by a PCU, cause the PCU to carry out the method as previously described.

It will be appreciated by those skilled in the art that two or more of the above mentioned embodiments, implementations, and/or aspects of the invention may be combined in any way deemed useful. Modifications and variation of the methods, which corresponds to the described modifications and variations of the apparatuses/devices, can be carried out by a person skilled in the art on the basis of the present description.

### BRIEF DESCRIPTION OF THE DRAWINGS

These and other aspects of the present invention will be discussed in more detail below, with reference to the attached drawings, as follows:
Fig. 1 shows an example of an interactive sauna power control system according to the present invention.
Fig. 2 shows a flowchart of a method according to the present invention, for power allocation carried out by a power control unit (PCU) for allocating power across HDs located within an area of a sauna facility, when at least two HDs are turned on.
Fig. 3 shows a flowchart of a method according to the present invention, for power allocation carried out by the PCU for allocating power across HDs located within a sauna facility when a user/customer request to operate one or more of the turned on HDs is received; and
Fig. 4 shows a flowchart for generating and displaying economic data in accordance with the present invention, and/or energy consumption data, and/or operation data for each of the heating device.

### DETAILED DESCRIPTION OF EMBODIMENTS

Embodiments of the present disclosure will be described herein below with reference to the accompanying drawings. However, the embodiments of the present disclosure are not limited to the specific embodiments and should be construed as including all modifications, changes, equivalent devices, and methods, and/or alternative embodiments of the present disclosure.

The term "have", "may have", "include", and "may include" as used herein indicate the presence of corresponding features (for example, elements such as numerical values, functions, operations, or parts), and do not include the presence of additional features.

The term "A or B", "at least one of A or/and B", or "one or more of A or/and B" as used herein include all possible combinations of items enumerated with them. For example, "A or B", "at least one of A and B", or "at least one of A or B" means (1) including at least one A, (2) including at least one B, or (3) including both at least one A and at least one B.

The term such as "first" and "second" as used herein may modify various elements regardless of an order and/or importance of the corresponding elements, and do not limit the corresponding elements. These terms may be used for the purpose of distinguishing one element from another element. For example, a first element may be referred to as a second element without departing from the scope of the present invention, and similarly a second element may be referred to as first element.

As used herein and also in the appended claims, the singular forms "a", "an", and "the" include plural reference unless the context clearly dictates otherwise. Similarly, the words "comprise", "contain" and "encompass" are to be interpreted inclusively rather than exclusively; that is to say, in the sense of "including, but not limited to". Similarly, the word "or" is intended to include "and" unless the context clearly indicates otherwise. The terms "plurality", "multiple" or "multitude" refer to two or more, i.e. 2 or >2, with integer multiples, wherein the terms "single" or "sole" refer to one, i.e. =1. Furthermore, the term "at least one" is to be understood as one or more, i.e. 1 or >1, also with integer multiples. Accordingly, words using the singular or plural number also include the plural and singular number, respectively. Additionally, the words "herein", "above", "previously" and "below" and words of similar import, when used in this application, shall refer to this application as a whole and not to any particular portions of the application.

Furthermore, certain terms are used for reasons of convenience and are not intended to limit the invention. The terms "right", "left", "up", "down", "under" and "above" refer to directions in the figures. The terminology comprises the explicitly mentioned terms as well as their derivations and terms with a similar meaning. Also, spatially relative terms, such as "beneath", "below", "lower", "base", "above", "upper", "top", "proximal", "distal", and the like, may be used to describe one element's or feature's relationship to another element or feature as illustrated in the figures. These spatially relative terms are intended to encompass different positions and orientations of the devices in use or operation in addition to the position and orientation shown in the figures. For example, if a device in the figures is turned over, elements described as "below" or "beneath" other elements or features would then be "above" or "over" the other elements or features. Thus, the exemplary term "below" can encompass both positions and orientations of above and below. The devices may be otherwise oriented (rotated 90 degrees or at other orientations), and the spatially relative descriptors used herein interpreted accordingly. Likewise, descriptions of movement along and around various axes include various special device positions and orientations.

The terms used in describing the various embodiments of the present disclosure are for the purpose of describing particular embodiments and are not intended to limit the present disclosure. As used herein, the singular forms are intended to include the plural form as well, unless the context clearly indicates otherwise. All of the terms used herein including technical or scientific terms have the same meanings as those generally understood by an ordinary skilled person in the related art unless they are defined otherwise. The terms defined in a generally used dictionary should be interpreted as having the same or similar meanings as the contextual meanings of the relevant technology and should not be interpreted as having ideal or exaggerated meanings unless they are clearly defined herein. According to circumstances, even the terms defined in this disclosure should not be interpreted as excluding the embodiments of the present disclosure.

For the purpose of determining the extent of protection conferred by the claims of this document, due account shall be taken of any element, which is equivalent to an element specified in the claims.

The following description with reference to the accompanying drawings is provided to assist in a comprehensive understanding of exemplary embodiments of the invention as defined by the claims and their equivalents. It includes various specific details to assist in that understanding but these are to be regarded as mere exemplary. Accordingly those of ordinary skill in the art will recognize that various changes and modifications of the embodiments described herein can be made without departing from the spirit and scope of the invention. In addition, descriptions of well-known functions and constructions may be omitted for clarity and conciseness. Moreover, it should be appreciated that the Figures are not entirely in scale and they server merely the purpose of illustration.

Below, a list of terms and their meaning are defined herewith.

The term "sauna" is used to represent a confined space designed as a place to experience dry or wet heat sessions. The steam and high heat make the bather perspire. The sauna may be used for additional purposes such as infrared therapy, aroma therapy etc.. For the purpose of this description the term sauna can be used to refer to any one of regular sauna operating at about 90 degree Celsius, a steam room operating at about 40 degree Celsius, or biosauna operating at about 50-60 degree Celsius etc..

The term "sauna facility" is used to refer to any facility in which one or more sauna users can make use of saunas of same or different types.

The term "heating device (HD)" is used to represent a device that when in use produces high heat and/or steam inside the sauna area. For example, a sauna heater or stove or steam generator.

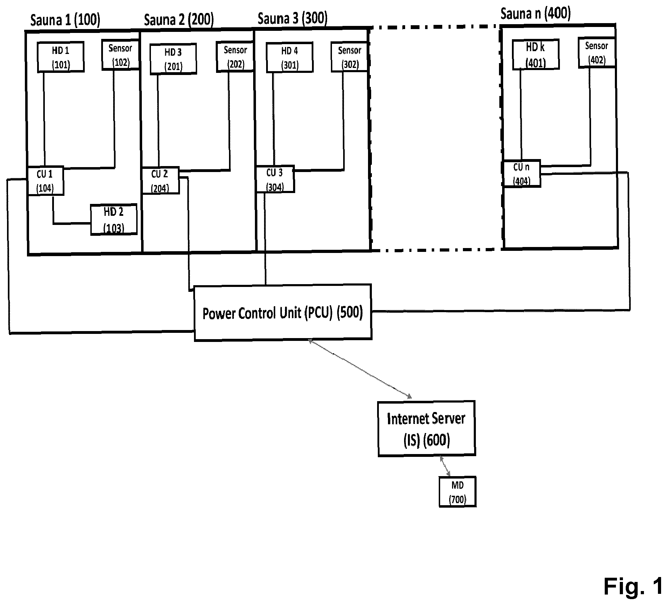

Fig. 1 describes an example interactive sauna power control system. The interactive sauna power control system is used to efficiently control power allocation across the HDs inside saunas, located within the sauna facility. The interactive sauna power control system shown in this example comprises a group of saunas 100, 200, 300, 400 within the sauna facility that can be heated and ventilated for sauna user(s). Each sauna 100, 200, 300, 400 is shown to include one or more HDs 101, 103, 201, 301, 401, a control unit (CU) 104, 204, 304, 404, and a sensor 102, 202, 302, 402. It is understood that although in the Fig. 1 four saunas are shown, the number of saunas can be more or less depending on the size of the facility that hosts the saunas. Moreover, the number of HDs in each sauna can also vary, perhaps depending on the dimensions of the area inside the sauna, and is not limited to 1 or 2 HD per sauna as depicted in the example Fig. 1.

Each HD 101, 103, 201, 301, 401, and sensor 102, 202, 302, 402 is shown to be connected to a specific CU 104, 204, 304, 404 located inside the same sauna as the corresponding HD and the sensor. The connection may be designed to be wired or wireless connections. The CU 104, 204, 304, 404 may also include (not shown in Fig. 1) a physical switch or a touch button on the display for turning the sauna (i.e., corresponding HDs and sensors inside the sauna area) on and off. This provides a sauna facility operator with the flexibility of turning each sauna (i.e., the HDs and sensors inside the sauna) individually on or off. Furthermore, each CU 104, 204, 304, 404 may also comprise a display which provides information, regarding the respective sauna. The information may include information on present temperature and/or humidity level of the sauna, information on occupancy of the sauna, information on a turning on/off timer of the sauna (if set). These information can be advantageously used by the sauna operator and/or the sauna user to determine the status of the sauna.

The sensors 102, 202, 302, 402 are used to measure conditions in the sauna. Each sensor can include a temperature sensor to measure temperature in the area of each sauna, humidity sensor to measure humidity level in the area of each sauna, and/or door or window sensor to detect if a door and/or window of the sauna is open for a predetermined period of time. The sensors 104, 204, 304, 404 may run in parallel to any other internal sensors located within the HDs. For example, the HDs can have its own temperature and/or humidity sensor. An advantage of the sensors 102, 202, 302, 402 not being a part of either the HDs or the CUs is that the sensors can be easily changed or removed, if damaged, without preventing usual operation of the HDs.

The CUs 104, 204, 304, 404 of the saunas 100, 200, 300, 400 are shown to be connected to a computer, herein referred to as Power Control Unit (PCU) 500, via corresponding lines which may be wired or wireless connections. The PCU 500 serves as central controller that controls the power allocation across all the HDs of the saunas, within the sauna facility, that are turned on. The PCU 500 receives control information from the turned on HDs and sensors via the CUs. The control information may include information on present temperature and/or humidity level of the sauna, information on occupancy of the sauna, information on a turning on/off timer of the sauna (if set) etc. The PCU 500 can communicate with each CU individually. The PCU 500 therefore regulates the power allocation across the HDs, so that the temperature and/or humidity inside the sauna area where the HDs are located can be controlled to be of desired value.

The CUs 104, 204, 304, 404 and the PCU 500 may each comprise a processor, memory, and program code to be executed in the memory of the processor so that the operation of the interactive sauna power control is at least partially implementable programmably.

It will be easily understood that in another example, the functionality of the PCU 500 may be performed by any of the CUs 104, 204, 304, 404 and can that CU can be designated as master CU. The master CU is connected with all other CU units located within the sauna facility. For example, CU 1 104 can perform the functionality of the PCU 500 and can be designated as the master CU. All other CU's 204, 304, 404 are connected via a connection means to the master CU.

The system of Fig. 1 allows for online access of the interactive sauna power control functionality via an application or web browser page on a mobile device (MD) 700. A user using a MD 700 with interactive sauna power control application or accessing a web browser page can configure parameters over the internet such as temperature and/or humidity value for a sauna 100, 200, 300, 400, preset time for a sauna user/customer request, timer for turning the saunas (i.e., the corresponding HDs) on or off in a day etc.. Moreover, the MD 700 can also be used online to view selected performance parameters such as energy consumption data, and/or the operation data of each sauna (i.e., corresponding HDs within the sauna) located within the sauna facility. The user of the MD 700 has the option of receiving extensive evaluations such as customer requirements, temperature curves or energy consumption with daily, weekly, monthly or annual evaluations. Monitoring and operation of the saunas via app or web browser is possible as well as remote maintenance of the saunas.

The operation of the interactive sauna power control system according to the invention is described below.

### First specific embodiment of the present invention

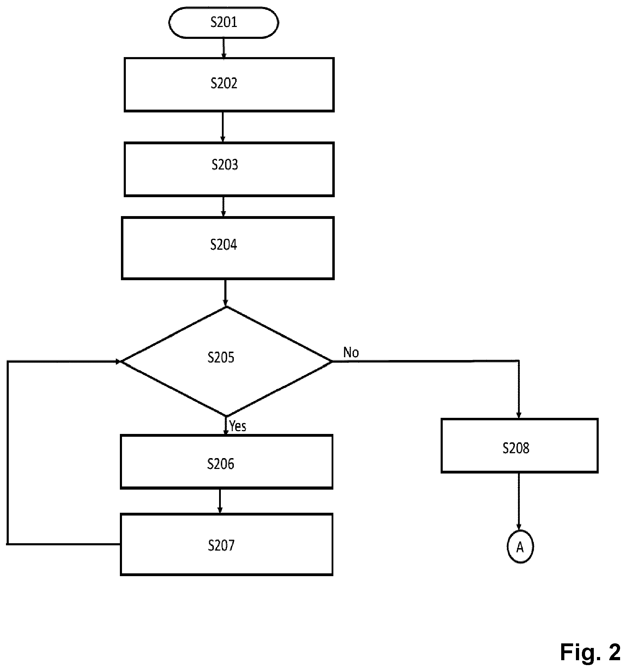

Fig. 2 shows a flowchart of a method for power allocation carried out by the PCU for allocating power across HDs located within a sauna facility, when at least two HDs are turned on.

The PCU 500 starts the method at Step S201. The start may be triggered by turning on of one or more saunas (i.e., corresponding HDs and sensors), located within the sauna facility, based on a set timer or a first sauna operator input. For example, the method starts when a first sauna operator input is provided via either the physical switch or touch button on the display in the CU. For example, the method may also start when a set timer for turning on one or more of the saunas (i.e., corresponding HDs and sensors) is engaged, at the PCU 500, at the beginning of daily operation. For safety reasons, an automatic switch-on (via the set timer or the first sauna operator input) is only possible if it is ensured that no flammable bodies are lying on the HD. For e.g., an employee of the sauna facility checks the inside of a sauna and acknowledges this with a key switch. After closing the door of the sauna and thus the door contact, the automatic switch-on is armed. If the door of the sauna is opened again without authorisation, the automatic switch-on is deactivated. This deactivation may be shown on the display, of perhaps the CU or the PCU, or online (via the application or the web browser page). The deactivation may also be signalled via an automatic email generated by the CU or the PCU.

In Step S202, the PCU 500 determines if at least two of the HDs located within the sauna facility are turned on. For example, when initially Sauna 1 100 and Sauna 2 200 are only turned on, based on either the first operator input or the set timer, the PCU can determine that the number of corresponding HDs that are turned on is three. The knowledge about which HDs are located within a particular sauna may be preset at the PCU 500 or may be provided by the CU to the PCU 500 once the sauna is turned on. The determination that at least two of the HDs are turned on allows for the PCU 500 to start a power allocation algorithm stored at the PCU for efficiently allocating power across the turned on HDs.

In Step S203, the PCU 500 identifies an operator priority allocated to the turned on HDs located within the sauna facility.

For example, Table 1 represents an example operator priority allocated to HDs located within the sauna facility. The operator priority allocated may be preset in the PCU 500 by the sauna facility operator or can be set by the PCU 500 itself.

**Table 1: Allocated operator priority**

| | |
|---|---|
| HDs associated with a Finnish Sauna | Priority 1 |
| HDs associated with Infusion Oven | Priority 2 |
| HDs associated with Biosauna for Mixed Gents and Ladies | Priority 3 |
| HDs associated with Biosauna for Ladies only | Priority 4 |
| HDs associated with Steam room for Ladies only | Priority 5 |
| HDs associated with Steam room for Gents | Priority 6 |

For example, Table 1 represents allocated operator priority set by the sauna facility operator in the PCU 500 beforehand. The example in Table 1 does not limit anyway in setting a different priority by the sauna facility operator. In Table 1, the information on the allocated operator priority for the HDs provides higher priority for HDs that are associated with sauna that operates at higher temperatures (or where infusions are offered). For example, in Table 1, the Finnish sauna operates at about 90 degree Celsius whereas a steam room only needs to operate at about 40 degree Celsius. Therefore, Finnish sauna has higher priority than steam rooms as it needs more power to heat up to higher operating temperature of about 90 degree Celsius. Thus, depending on the operator priority allocated to the HDs that are turned on the HDs get higher or lower values of their rated power to allow efficient heating up of the HDs to achieve a set point value of temperature and/or humidity for a sauna area where the HD is located.

The term "rated power" of an HD is used to represent a measurement of the maximum amount of power that can be used with the HD.

The term "set point value of temperature and/or humidity" for a sauna is used to represent a value of temperature and/or humidity that the sauna needs to attain in the surrounding area of the sauna, when in use. For example, the set point value of temperature and/or humidity for a regular sauna (such as Finish sauna) is approximately 90 degree Celsius, the set point value of temperature for steam room is about 40 degree Celsius, and the set point value of temperature for biosauna is about 50-60 degree Celsius etc..

Next, when it is determined in S203 that at least two HDs are turned on within the area of the sauna facility, the method proceeds to Step S204 where the PCU 500 calculates a respective base value power needed to be provided to each of the respective turned on HD to achieve and maintain a base value of temperature and/or humidity in the sauna area surrounding each of the respective HD.

The "base value of temperature and/or humidity" of a sauna is used to represent a lower value of sauna temperature and/or humidity than the set point value of temperature and/or humidity that the sauna operator can choose to operate the sauna (i.e., corresponding turned on HD) when not in use by a user/customer. In one example, the base value may also be set to be "room temperature". In that case, when the HD is turned on it does not heat up for energy-saving reasons. The user/customer may then request the sauna (i.e., corresponding HD) operation independently. The temperature drops back to base value (i.e., room temperature) in standby mode, after a preset time of the operation has elapsed.

The set point value and/or the base value for a sauna may be identified at the PCU 500 based on a received second operator input. The second operator input may be received either via the CU or at the PCU or online via the MD 700.

The base value for a sauna may be selected by the sauna operator from a set of values of temperature and/or humidity stored in the PCU or CU. Each of the entry in the set of values of temperature and/or humidity is lower as compared to the set point value of temperature and/or humidity for the sauna. For example, the base value temperature for a regular sauna may be perhaps selected from the set of about {50, 60, 70, or 80} degree Celsius which is lower than about 90 degree Celsius set point value of temperature for the regular sauna. Thus, it allows the HDs in the saunas to operate at lower power value when there is no sauna user/customer request (for example, when the sauna is turned on at the beginning of the operation in the day), thereby efficiently reducing the total energy consumption of the sauna facility.

In Step S204 the PCU 500 calculates the respective base value power needed to be provided to each of the respective turned on HD based on the operator priority allocated to the respective HD. For example, in Table 1 (assuming all the HDs are turned on), HDs associated with the Finnish sauna was allocated priority 1 and therefore receives its full rated power to heat up quickly to the base value of temperature and/or humidity, the HD associated with the Infusion oven had priority 2 and therefore can only get 2/3 of their rated power, whereas the HDs associated with the biosaunas (for both Mixed and Ladies) and steam rooms (for Gents and Ladies) has a lower priority 3-6 and therefore may only be allowed to operate at 1/3 of their rated power. This allows the sauna facility operator to heat up the HDs gradually to their respective base value temperature and avoids switch-on peaks during power measurement by the energy supplier.

In Step S205, the PCU 500 determines if a sum of each of the respective base value power needed to be provided to each of the respective turned on HD exceeds a predetermined maximum power value. The term "predetermined maximum power value" represents an maximum system power limit that can be spent by all of the turned on HDs located within the sauna facility. The predetermined maximum power limit may be set by the sauna operator.

If in Step S205 it is determined that the sum of each of the respective base value power needed to be provided to each of the respective turned on HD indeed exceeds a predetermined maximum power value, the method then proceeds to Step S206 where the PCU 500 identifies one of the turned on HD's with a lowest operator priority allocated.

Once the PCU identifies in Step S206 a turned on HD with the lowest operatory priority allocated, the PCU, in Step S207, then reduces the base value power needed to be provided to that identified turned on HD, where the base value power needed to be provided is greater or equal to a minimum power needed to operate the identified turned on HD with the lowest operator priority.

The method steps S205-S207 will iterate until the condition in S205 is satisfied.

Once the PCU 500 determines that the sum of each of the respective base value power needed to be provided to each of the respective turned on HD indeed does not exceed the predetermined maximum power value, i.e., the answer to the test in S205 is No, the PCU 500 then proceeds to provide the determined base value power to each of the respective turned on HD, in Step S208.

The method steps performed by the PCU next continues for the case when a sauna user/customer request arrives.

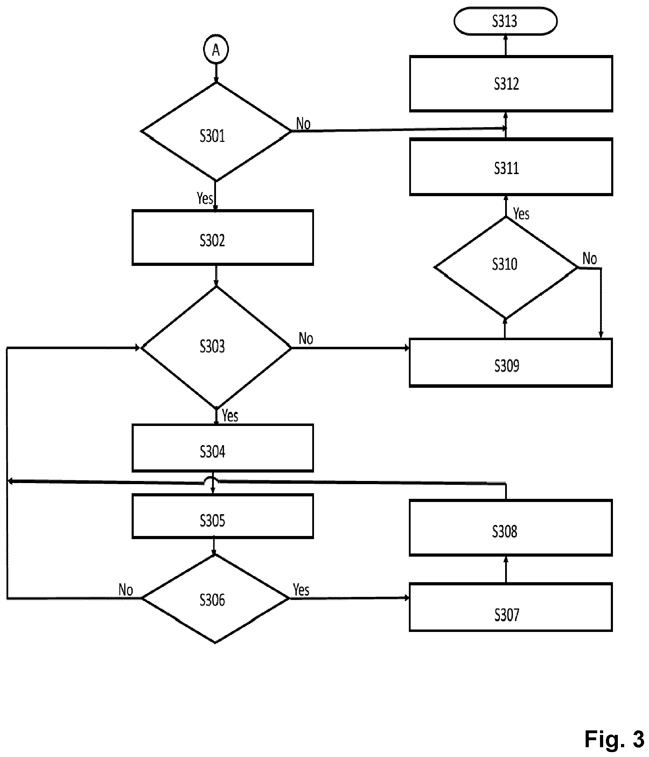

Fig. 3 shows a flowchart of a method for power allocation carried out by the PCU for allocating power across HDs located within a sauna facility when a user/customer request to operate one or more of the turned on HDs is received.

In Step S301, the PCU 500 determines if there is a user/customer request to operate one or more of the turned on HDs at a set point value of temperature and/or humidity in the surrounding of the respective HD (i.e., the area of the corresponding sauna in which the HD is located) for a preset time. The preset time may be identified based on the received second operator input or may be received as an input from the sauna user/customer, via the CU or at the PCU or online via the MD 700. For example, the preset time of an HD operation upon a user/customer request can be set by the sauna operator to be e.g.20min after which the HD goes back to the lowering mode (i.e., operate at low power to achieve base value of temperature and/or humidity in the surrounding area of the HD).

If in S301, the PCU 500 determines that there is indeed a user/customer request to operate one or more of the turned on HDs at the set point value of temperature and/or humidity in the surrounding of the respective HD (i.e., the area of the corresponding sauna in which the HD is located) for the preset time, the PCU 500 then calculates, in Step S302, for each of the respective HD (with user/customer request) a respective operating power needed to be provided to the respective HD (with user/customer request) to achieve and maintain the respective set point value of temperature and/or humidity in the surrounding of the respective HD.

If in S301, the PCU 500 determines that there is indeed no user/customer request to operate one or more of the turned on HDs at the set point value of temperature and/or humidity in the surrounding of the respective HD (i.e., the area of the corresponding sauna in which the HD is located) for the preset time, than the PCU 500 may turn off the HDs, in Step S312, based on the sauna facility operator input or a set timer

In Step S303, the PCU 500 determines if a sum of respective operating power needed to be provided to each respective HD (with user/customer request) and the base value power needed to be provided to the rest of the HDs (without user/customer request) will exceed the predetermined maximum power value. The term "predetermined maximum power value", as has been explained before, represents the maximum system power limit that can be spent by all the turned on HDs located within the sauna facility. The predetermined maximum power limit may be set by the sauna operator. For example, the sauna operator can choose to set the predetermined maximum value to be 60 Kilo-Watts (kW) for all the HDs.

If in Step S303 it is determined that the sum of respective operating power needed to be provided to each respective HD (with user/customer request) and base value power needed to be provided to the rest of the HDs (without user/customer request) will indeed exceed the predetermined maximum power value, the method then proceeds to Step S304 where the PCU 500 identifies one of the rest of the HDs (without user/customer request) with a lowest operator priority allocated.

Once the PCU identifies in Step S304 one of the rest of the HDs (without user/customer request) with a lowest operator priority allocated, the PCU 500 in Step S305 then reduces the base value power needed to be provided to that identified HD, where the base value power needed to be provided is greater or equal to a minimum power needed to operate the identified HD with the lowest operator priority.

In Step S306, the PCU 500 determines if each of the base value power needed to be provided to the rest of the HDs (without user/customer request) is equal to minimum power needed to operate each of the rest of the HDs.

If the answer to the determination in step S306 is No and the answer to the determination in step S303 is Yes, the method steps S303-S306 will iterate until it is either determined in S306 that indeed each of the base value power needed to be provided to the rest of the HDs (without user/customer request) is equal to minimum power needed to operate each of the rest of the HDs or it is determined that answer to the determination condition in S306 is No. Thus, in brief the PCU 500 first tries to optimize the calculated base value power for each of the rest of the HDs (without user/customer request), from the lowest operator priority allocated to the highest operator priority allocated, until the sum of the respective operating power needed to be provided to each respective HD (with user/customer request) and base value power needed to be provided to the rest of the HDs (without user/customer request) does not exceed the predetermined maximum power value.

If the answer to the determination in step S306 is Yes and the answer to the determination in step S303 is Yes, the method then proceeds to Step S307, where the PCU 500 identifies one of the HDs (with user/customer request) with a lowest operator priority allocated. The PCU 500 then, in Step S308, reduces the operating power needed to be provided to that identified HD, where the operating value power needed to be provided is greater or equal to a minimum power needed to operate the identified HD with the lowest operator priority.

The PCU 500 iterates through the method Steps S303-S308 until the answer to the determination condition in S303 is No. Thus, the method thereby tries to optimize the calculated respective operating power needed to be provided to each of the HDs(with user/customer request) from the order of lowest operator priority allocated to highest operator priority allocated, until the sum of the respective operating power needed to be provided to each respective HD (with user/customer request) and base value power needed to be provided to the rest of the HDs (without user/customer request) does not exceed the predetermined maximum power value.

Once the PCU 500 determines that the answer to the test in S303 is No, the PCU 500 then proceeds, in Step S309, to provide the determined respective base value power to each of the respective turned on HD (without user/customer request) and determined respective operating power to each of the respective turned on HD (with user/customer request), to achieve and maintain their respective base value or respective set point value of temperature and/or humidity in the surrounding area of the respective HD. Thus, the method has advantage that the overall maximum system power (i.e., predetermined maximum power value) will never be exceeded at any given point of time and the system will prioritize allocating power to the HDs (with user/customer request) as compared to the HDs (without user/customer request). Furthermore within the HDs (without or with user/customer request) the system will prioritize allocating power from higher operator priority allocated to lowest operator priority allocated. Thus the method optimizes the load of the overall system efficiently.

The PCU 500 further determines, in Step 310, if a preset time for one of the turned on HD (with user/customer request) has elapsed. If the answer is No, the PCU 500 will keep on implementing previous method step S309.

If the answer to the afore-mentioned determination step S310 is Yes, the method then proceeds to step S311 where the PCU 500 provides a reduced operating power to the HD (with user/customer request) whose preset time has elapsed to operate at the base value of temperature and/or humidity. For example, the reduced operating power is 1/3 of a nominal power to each one of the HDs and is provided by phases in a three phase network. For example, reduced operating power can be provided by the HD with one phase and the phases are changed automatically to avoid unequal load on the heaters.

In Step S312, the PCU 500 may turn off the HDs based on the sauna facility operator input or a set timer. Once, all the HDs are turned off in Step S312, the method ends in Step S313.

In a further advantageous embodiment, according to any of the method steps in Fig. 2 or Fig. 3, where if it is determined that at least two HDs located within an area of the sauna facility are turned on, the base value power to be provided to one or more of the at least two HDs is set to be sufficient to reach the set point value of temperature and/or humidity, and where, after reaching the set point value of temperature and/or humidity, the base value power returns to an extent sufficient to achieve and maintain the base value of temperature and/or humidity. For example, For. e.g., after turning on at the start of operation, the sauna facility one or more of the HDs can heat up once to a respective set point value of temperature and/or humidity. When the HD has reached its set point value of temperature and/or humidity in the surrounding area of the HD, it then drops to the base value of temperature and/or humidity. This preheating step to the set point value of temperature and/or humidity once is quite useful if the sauna (i.e., corresponding HD) is located outside in an open space of the sauna facility or if the that sauna (i.e., corresponding HD) is the most frequently visited one by a user/customer.

In a further advantageous embodiment, the Fig. 3 method steps may further comprise receiving by the PCU a temperature and/or humidity value associated with at least one of the turned on HDs. The PCU 500 may then proceed to determine if the received temperature and/or humidity value for each of the at least one of the turned on HDs is greater or equal to the set point value of temperature and/or humidity for the respective turned on HD. When the PCU determines that the set point value of temperature and/or humidity for the respective HD is reached, the PCU displays a first colour by a corresponding light source associated with the respective HD, and when the PCU determines that the set point value of temperature and/or humidity for the respective HD is not reached, the PCU displays a second colour by the corresponding light source associated with the respective HD. For example, an LED band (e.g. under a sauna bench) displaying red colour is used to indicate to the user/customer that the set point value of temperature and/or humidity is reached. The LED band displays white colour (or any other colour) to indicate to the user/customer that the set point value of temperature and/or humidity is not reached.

In a further advantageous embodiment, according to any of the method steps in Fig. 2 or Fig. 3, where it is detected by means of a door and/or window sensor that a surrounding door and/or window of one of the turned on HD is open for a predetermined period of time, the PCU turn off the corresponding HD. Also, when using a ventilation system, in a surrounding area of an HD, actuators in the ventilation system that supply or extract air from the surrounding area of the HD can be closed if no user/customer request is detected to use the corresponding HD. They are only opened for the duration of the user/customer request (i.e., the preset time) in order to avoid heat loss.

In a further advantageous embodiment, according to any of the method steps in Fig. 2 or Fig. 3, where power for powering the tuned on HDs is primarily received from a photovoltaic (PV) system during the day.

In a further advantageous embodiment, according to any of the method steps in Fig. 2 or Fig. 3, where when the HDs are turned on, a constant heat storage device (such a water core heat storage device) and/or a user controlled heat storage device (such as chemical heat storage devices) provided for at least one of the turned on HDs is operated by the PCU for storing heat locally, and when power is not available to operate the at least one of the turned on HDs in a sufficient or economic manner, the constant heat storage device and/or the user controlled heat storage device are controlled to release the stored heat after turning off the respective HD. In another example, the constant heat storage device and/or the user controlled heat storage device can be operated in parallel with a grid connected HD to minimise electricity costs. The grid operated HD is usually necessary because the heat quantity of the heat storage unit depends on the sun or the electricity generation of the CHP unit and is therefore not scalable.

Additionally, the sauna facility or the building in which it is situated can host a central heat buffer storage for the entire building (including the sauna areas). The central heat buffer storage can be supplied by combined heat and power (CHP) unit, among others, as the CHP emits heat when generating electricity. The heat from the central heat buffer storage can be used by radiators in the sauna facility, e.g. placed under the sauna benches in saunas. If there is a surplus power from the PV system, e.g. during light-intense periods, the electricity can be supplied to the CHP to generate heat and supply the buffer storage with heat to the stored. In low-light periods when the PV power supplies are too little or no electricity can be provided, the heat from the central heat buffer storage can then be used to supply the radiators in the saunas, provided that the radiators in the sauna can be directly provided with heat.

The term "sufficient or economic manner" operation is used to represent that the power needed to operate the HD to achieve and maintain a certain determined temperature and/or humidity is available in the system or the cost associated with the power needed to operate the HD is not too high respectively.

For example, when a HD (such as stoves) also have a water core heat storage available, the HD stores the heat locally perhaps under the benches of the sauna during the day when the HDs are turned on and powered by the PV system. The HD can release it back to the sauna in the evening during the hours without PV power or when the PV power prices are high, in order to keep grid consumption as low as possible and also to manage costs of running the sauna facility.

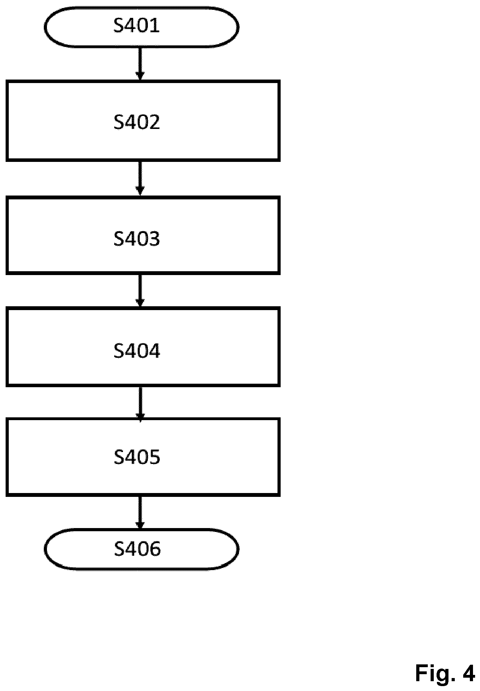

Fig. 4 shows a flowchart for generating and displaying economic data, and/or energy consumption data, and/or operation data for each of the HD.

The method starts, in Step S401, when a third sauna operator input is received to generate and display energy consumption data, and/or operation data, and/or economic data of each of the HDs within the sauna facility.

The PCU 500 collects the energy consumption data of each of the HDs in Step S402. For example, the energy consumption data may comprise data of energy consumption for the HD over a day, and/or a week, and/or a month, and/or a year.

The PCU 500 may further collect the operation data for each of the HDs in Step S403. For example, the operation data may comprise turn-on time with/without user/customer request for the HD, the HD output power, and the number of user/customer request for the HD.

In Step S404, the PCU may calculate economic data for each of the HDs based on the energy consumption data and the operation data for each of the HDs. For example, the calculated economic data may be kilo-Watts per hour (kWh) per user/customer demand parameter. Thus the economic data allows the individual sauna of the sauna facility to be compared with each other in terms of their economic efficiency.

In Step S405, the PCU may display the economic data, and/or the energy consumption data, and/or the operation data via a display connected to the PCU.

The PCU then terminates the method in Step S406, if a predetermined time has passed after the display of the economic data, and/or the energy consumption data, and/or the operation data via the display connected to the PCU.

In a further advantageous embodiment, according to any of Fig. 2, Fig. 3, or Fig. 4, the method steps may further comprise the steps of accessing a webpage for electricity transaction price information per unit time, for example, LMP which represents price for electric energy at each load zone. For example, a software at the PCU 500 reads out individual web pages with price information that has changed over time and processes the data. The data is now output by the software in encrypted form and is available to the PCU 500 for further processing.

The PCU 500 may further perform the turning on, or the turning off, or setting the base value of temperature and/or humidity greater than a threshold for the turned on HDs based on a comparison of the electricity transaction price information per unit time against a predetermined pricing threshold. For example, with the prices of the Leipzig electricity exchange (Leibziger Strombörse), the HDs can be turned on in the hours of low electricity prices, or run higher base value temperatures, or be turned off correspondingly earlier when electricity prices are high. This allows an efficient cost managed operation of the sauna facility and can result in savings for both the sauna operator and the user/customer.

In a further advantageous embodiment, the HDs can run at a higher set point value of temperature and/or humidity during hours when electricity prices are cheap, in order to remain slightly below the set point value during hours when electricity prices are high.

The economic data, and/or the energy consumption data, and/or the operation data for each of the HD may also be stored centrally on a server and can be accessed online via approved units. The data can also be used to control other devices within the sauna facility such as battery management systems (BMSs), ventilation motors, and/or air conditioning systems accordingly.

Further advantageous embodiments can also include a drying process of the sauna facility. In operation with a HD (e.g., steam generator), a drying process can be started to dry the sauna after the end of operation, here the sauna operator can specify the drying time as well as temperature.

Thus in a nutshell the invention described in Figs. 2, 3, and 4 above discussed an interactive sauna control system which allows for an efficient load (power) managed operation of the overall sauna facility with one or more HDs. Initially, after turning on, the sauna (i.e., corresponding HDs) is heated up to a preset, freely selectable and reduced base value of temperature and/or humidity. By pressing a physical switch or a touch button on a CU, a user/customer can request a HD to achieve a set point value of temperature and/or humidity in the surrounding area of the HD. This is reached within 6-15 minutes, depending on the initial base value of temperature and/or humidity in the surrounding of that HD. The set point value of temperature is then maintained by the operation of the HD for. a preset time (e.g., 20min.) requested either by the customer/user or set by the sauna operator. After the time has elapsed, the temperature and/or humidity drops back to the reduced base value.

In standby mode where there is no user/customer request, only one phase (1/3 of the nominal power) of the sauna heater is controlled. The phases are changed regularly by the unit to have an even wear. The maximum operating power of the HD is only called up if there is a customer/user/customer request. The HDs are turned off after a days operation (for example, at 3:00 a.m).

The PCU takes over the load management (i.e., power allocation) of the turned on HDs such that a predetermined maximum power value for the overall operation of the turned on HDs is never exceeded. The PCU makes use of a priority information of the HDs for performing the power allocation across the HDs in an efficient manner.

It will be appreciated that the invention also applies to computer programs, particularly computer programs on or in a carrier, adapted to put the invention into practice. The program may be in the form of a source code, an object code, a code intermediate source and object code such as in a partially compiled form, or in any other form suitable for use in the implementation of the method according to the invention. It will be appreciated that such a program may have different architectural designs. For example, a program code implementing the functionality of the method or system according to the invention may be sub-divided into one or more sub-routines. Many different ways of distributing the functionality among these sub-routines will be apparent to the skilled person. The sub-routines may be stored together in one executable file to form a self-contained program. Such an executable file comprise computer-executable instructions, for example, processor instructions and/or interpreter instructions (e.g., Java interpreter instructions). Alternatively, one or more or all of the sub-routines may be stored in at least one external library file and linked with a main program either statically or dynamically, e.g., at run-time. The main program contains at least one call to at least one of the sub-routines. The sub-routines may also comprise calls to each other. An embodiment relating to a computer program product comprises computer-executable instructions corresponding to each processing step of at least one of the methods set forth herein. These instructions may be sub-divided into sub-routines and/or stored in one or more files that may be linked statically or dynamically. Another embodiment relating to a computer program product may comprise computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a storage medium, such as ROM, for example, a CD ROM or a semiconductor ROM, or a magnetic recording medium, for example, a flash drive or a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or to be used in the performance of, the relevant method.

It should be noted that the above-mentioned embodiments illustrate rather than limit the invention, and those skilled in the art will be able to design many alternative embodiments with departing from the scope of the appended claims. In the claims, any reference signs placed between parentheses shall not be construed as limit the claim. Use of the verb "comprise" and its conjugations does not exclude the presence of elements or steps other than those stated in the claim. The article "a" or "an" preceding an element does not exclude the presence of a plurality of such elements. The invention may be implemented by means of hardware comprising several distinct elements, and by means of suitably programmed computer. In the device claim enumerating several means, several of these means may be embodied by one and the same item of hardware. The mere fact that certain measures are recited in mutually different dependent claims does not indicate that a combination of these measures cannot be used to advantage.

While the current invention has been described in relation to its specific embodiments, it is to be understood that this description is for illustrative purposes only. Accordingly, it is intended that the invention be limited only by the scope of the claims appended hereto.

## Claims

1. A power allocation method carried out by a power control unit, PCU, for allocating power across heating devices, HDs, located within an area of a sauna facility, the method comprising, preferably in this order, the following steps:
determining if the at least two HDs located within the area of the sauna facility are turned on (S202); and
identifying an operator priority allocated to each of the at least two turned on HDs (S203);
wherein, when it is determined that the at least two HDs located within the area of the sauna facility are turned on, calculate a respective base value power needed to be provided to each respective HD to achieve and maintain a base value of temperature and/or humidity in surrounding of the each respective HD (S204),
wherein a value of each of the respective base value power is determined based on the operator priority allocated to the respective HD, and
wherein a sum of the each of the respective base value power needed to be provided to the at least two turned on HDs should not exceed a predetermined maximum power value.

2. The method of claim 1, wherein when it is determined that the sum of the each of the respective base value power needed to be provided to the at least two turned on HDs will exceed the predetermined maximum power value (S205), the method further comprises the steps of:
identifying one of the at least two turned on HDs with a lowest operator priority allocated (S206); and
reducing the base value power needed to be provided to the identified one of the at least two turned on HDs (S207),
wherein the base value power needed to be provided is greater or equal to a minimum power needed to operate the identified one of the at least two turned on HDs.

3. The method of any one of claims 1 and 2, further comprising the steps of:
determining a user/customer request to operate at least one of the at least two turned on HDs at a set point value of temperature and/or humidity in the surrounding of the respective HD for a preset time (S301); and based on the respective set point value, determining a respective operating power needed to be provided to the respective HD to achieve and maintain the respective set point value for the preset time in the surrounding of the respective HD (S302), wherein a sum of operating power needed to be provided to the at least one of the at least two turned on HDs and base value power needed to be provided to a rest of the at least two turned on HDs should not exceed the predetermined maximum power value,
preferably wherein, when it is determined that the sum of operating power needed to be provided to the at least one of the at least two turned on HDs and base value power needed to be provided to the rest of the at least two turned on HDs will exceed the predetermined maximum power value (S303), the method further comprises the steps of:
identifying one of the rest of the least two turned on HDs with the lowest operator priority allocated (S304); and
reducing the base value power needed to be provided to the identified one of the rest of the least two turned on HDs (S305), wherein the base value power needed to be provided is greater or equal to a minimum power needed to operate the identified HD; and
wherein, when it is determined that the respective base value power across each of the rest of the at least two turned on HDs is a minimum power needed to operate each of the rest of the at least two turned on HDs (S306), the method further comprises the steps of:
identifying one of the at least one of the at least two turned on HDs with the lowest operator priority allocated (S307); and
reducing the operating power to be provided to the identified one of the at least one of the at least two turned on HDs (S308), wherein the operating power needed to be provided is greater or equal to a minimum power needed to operate the identified HD.

4. The method of any one of the preceding claims, wherein, after it is determined that the at least two HDs located within an area of a sauna facility are turned on, the base value power needed to be provided to one or more of the at least two turned on HDs is set to be sufficient to reach the set point value of temperature and/or humidity, and wherein, after reaching the set point value of temperature and/or humidity, the base value power returns to an extent sufficient to achieve and maintain the base value of temperature and/or humidity.

5. The method of any one of the preceding claims, wherein
the method further comprises the step of turning off the at least two turned on HDs based on a first operator input or based on a set timer (S312); and/or
the method further comprises the steps of:
collecting energy consumption data associated with each of the HDs located within the area of a sauna facility (S402);
collecting operation data associated with each of the HDs (S403), wherein the operation data includes turning on/off time, operation time with/without the user/customer request, output power, and/or number of user/customer requests;
generating economic data using the energy consumption data and operation data for each of the HDs (S403); and
displaying the energy consumption data, and/or the operation data, and/or the economic data on a display connected to the PCU (S404).

6. The method of any one of the preceding claims, further comprising the steps of:
accessing a webpage for electricity transaction price information per unit time;
performing the turning on, or the turning off, or setting the base value of temperature and/or humidity greater than a threshold for the at least two turned on HDs based on comparison of the electricity transaction price information per unit time against a predetermined pricing threshold.

7. The method of any one of the preceding claims, wherein power for powering the at least two turned on HDs is primarily received from a photovoltaic, PV, system during the day.

8. The method of any one of the preceding claims, wherein
when the at least two HDs are turned on, a constant heat storage device and/or user controlled heat storage device provided for at least one HD is operated for storing heat locally; and
when power is not available to operate at least one of the at least two turned on HDs in a sufficient or economic manner, the constant heat storage device and/or the user controlled heat storage device are controlled to release the stored heat after turning off the respective heating device.

9. The method of any one of the preceding claims, further comprising the step of:
receiving a second operator input identifying the base value, the set point value and/or preset time; preferably wherein,
the base value of the temperature is lower than the set point value of the temperature, and/or
the set point value of the temperature is about 90°C for regular sauna, about 50 to 60°C for biosauna, and about 40°C for steam sauna.

10. The method of any one of claims 3 to 9, wherein
the method further comprises the steps of:
determining if the preset time for the at least one of the at least two turned on HDs has elapsed (S310); and
when the preset time has elapsed, providing a reduced operating power to the at least one of the at least two turned on HDs to operate at the base value of the temperature and/or the humidity (S311),
preferably wherein the reduced operating power is 1/3 of a nominal power of each one of the HDs and is provided by a phase in a three phase network.

11. The method of any one of claims 3 to 10, further comprising:
receiving a temperature and/or humidity value associated with at least one of the at least two turned on HDs;
determining if the received temperature and/or humidity value is greater or equal to the set point value for the at least one of at least two turned on HDs; and
displaying a first colour by a light source associated with the at least one of the at least two turned on HDs when it is determined that the set point value for the at least one of the at least two turned on HDs is reached, and
displaying a second colour by the light source associated with the at least one of the at least two turned on HDs when it is determined that the set point value for the at least one of the at least two turned on HDs is not reached, wherein the second colour is different from the first colour.

12. The method according to any one of the preceding claims, wherein if it is detected by means of a door and/or window sensor that a surrounding door and/or window of one of the at least two turned on HDs is open for a predetermined period of time, turning off the one of the at least two turned on HDs.

13. A PCU apparatus comprising means for carrying out the method of any one of the preceding claims.

14. A computer program comprising instructions which, when the program is executed by a PCU, cause the PCU to carry out the method of any one of claims 1 to 12.

15. A computer-readable medium comprising instructions which, when executed by a PCU, cause the PCU to carry out the method of any one of claims 1 to 12.
